Europäisches Patentamt

European Patent Office

Office européen des brevets

(19)

(11) Numéro de publication : **0 161 451**
**B1**

(12) **FASCICULE DE BREVET EUROPÉEN**

(45) Date de publication du fascicule du brevet :
09.11.88

(51) Int. Cl.⁴ : **H 02 J   3/18**

(21) Numéro de dépôt : 85103931.3

(22) Date de dépôt : 02.04.85

(54) Dispositif d'élaboration d'un signal, correspondant à une grandeur variable liée à la puissance réactive d'un four à arc pour commander un compensateur de puissance réactive.

(30) Priorité : 06.04.84 FR 8405506

(43) Date de publication de la demande :
21.11.85 Bulletin 85/47

(45) Mention de la délivrance du brevet :
09.11.88 Bulletin 88/45

(84) Etats contractants désignés :
CH DE FR GB IT LI SE

(56) Documents cités :
FR-A- 2 457 029
US-A- 4 275 346
BROWN BOVERI REVIEW, vol. 70, nos. 9/10, septembre/octobre 1983, pages 330-340, Baden, CH; E. WANNER et al.: "Compensation systems for industry"

(73) Titulaire : CGEE ALSTHOM Société anonyme dite:
13, rue Antonin Raynaud
F-92309 Levallois-Perret (FR)

(72) Inventeur : Charles, Patrick
28, avenue de la Chardonnière
F-78124 Mareil sur Mauldre (FR)

(74) Mandataire : Weinmiller, Jürgen et al
Lennéstrasse 9 Postfach 24
D-8133 Feldafing (DE)

## Description

Dans les réseaux qui subissent de fortes perturbations d'intensité, dans les portions de réseau proches de fours à arc, il est nécessaire de prévoir des dispositifs de régulation de compensation d'énergie réactive et pour cela, il convient d'utiliser des dispositifs de mesure de puissance absorbée par le circuit électrique et si l'on veut agir immédiatement, pour atténuer les fluctuations de tension sur le réseau, il faut que le dispositif de mesure soit très rapide.

Le spectre de fréquence de la puissance instantanée d'un four à arc est représenté par une courbe continue dont l'amplitude est importante dans une gamme de fréquence comprise entre 0 et environ 25 Hz.

Or, on sait que les fluctuations de puissance de grande amplitude à ces fréquences basses provoquent un phénomène dit de « flicker » qui se caractérise par des fluctuations du flux lumineux émis par les lampes à incandescence, lorsque leur tension d'alimentation est modulée en amplitude.

Les compensateurs de puissance réactive commandés par thyristors, bien connus, sont capables d'atténuer ces phénomènes dans une large mesure, à condition de disposer de signaux de mesure, de puissance ou de tension donnant une image fidèle des fluctuations à compenser dans la bande de fréquence considérée, ici environ 0 à 25 Hz, sans déphasage appréciable dans cette bande de fréquence, ni bruit gênant au-delà de cette bande de fréquence.

Or, la mesure de tension ou de puissance réactive par les moyens connus ne permet d'atteindre qu'un seul de ces objectifs à la fois.

En effet, une chaîne de mesure connue est composée d'un discriminateur à diodes donnant un signal proportionnel à la valeur absolue de la tension ou bien d'un démodulateur quadratique donnant un signal proportionnel au carré de la tension ou encore d'un démodulateur de puissance réactive suivi d'un filtre passe-bas.

La fonction transfert est du type passe-bas, d'ordre plus ou moins élevé selon le gabarit de la gamme de fréquence souhaitée. On peut obtenir une décroissance très rapide de la courbe du spectre de fréquence à partir de la fréquence de coupure et les signaux à la sortie du dispositif sont de qualités suffisantes pour effectuer des mesures comparatives mais les déphasages des différentes fréquences dans la gamme considérée, à la sortie du dispositif par rapport à l'entrée, sont trop importants et rendent le signal de sortie impropre à toute commande dans un asservissement rapide.

Le document FR-A-2 457 029 décrit ainsi un circuit de commande d'un compensateur statique à thyristors de la puissance réactive due à une charge perturbatrice telle qu'un four à arc. Le dispositif comprend un capteur de puissance réactive suivi d'un filtre actif qui, pour les fréquences inférieures à 25 Hz, présente un gain sensiblement unitaire et imprime une avance de phase sensiblement égale au retard de phase introduit par le compensateur statique et par le capteur de puissance réactive. Un tel dispositif ne tient pas compte de l'analyse spectrale du signal de fréquence et du déphasage apporté par le filtre lui-même. Il en résulte un signal instable, entaché de bruit et qui comporte des déphasages avec gain, de certaines fréquences harmoniques par rapport à l'entrée du filtre, rendant le signal impropre à la commande.

La présente invention a donc pour but de pallier cet inconvénient et a pour objet un dispositif d'élaboration d'un signal, correspondant à une grandeur variable liée à la puissance réactive d'un four à arc, pour commander un compensateur de puissance réactive, comprenant un démodulateur de puissance réactive ou de tension suivi d'un ensemble de filtres, caractérisé en ce que cet ensemble comprend des filtres actifs coupe-bande d'une largeur de $\pm$ F autour des fréquences $2 f_o$, $4 f_o$ et $6 f_o$ et des filtres actifs coupe-bande, à bande très étroite de l'ordre de $\pm 2$ Hz, autour des fréquences $f_o$ et $3 f_o$, $f_o$ étant la fréquence de la tension d'alimentation et F étant voisin de $f_o/2$, ledit ensemble de filtres étant suivi d'un circuit correcteur à avance de phase dans la bande de fréquence de 0 à F corrigeant les retards de phase apportés par lesdits filtres.

Selon une réalisation préférée, ledit ensemble de filtres comporte en outre, un filtre actif passe-bas de fréquence de coupure égale à $6 f_o$.

Avantageusement, ledit ensemble de filtres comprend également un filtre actif coupe-bande de bande étroite de l'ordre de $\pm 2$ Hz autour de la fréquence $5 f_o$.

Selon une autre caractéristique de l'invention, ledit circuit correcteur à avance de phase comprend un filtre actif du deuxième ordre, passe-haut, dont la fréquence de coupure est de l'ordre de 2 F/3, ledit filtre passe-haut étant alimenté par la sortie dudit ensemble de filtres qui alimente également une première entrée d'un circuit sommateur dont une deuxième entrée reçoit la sortie dudit filtre passe-haut.

L'invention sera bien comprise à la lumière de la description d'un exemple de réalisation de l'invention faite ci-après en regard du dessin annexé dans lequel :

La figure 1 montre le dispositif selon l'invention représenté sous forme de schéma bloc.

La figure 2 représente le spectre de fréquence de la puissance d'un four à arc.

La figure 3 est un diagramme du gain en fonction de la fréquence obtenue par l'ensemble des filtres de la figure 1.

La figure 4 est un diagramme montrant les déphasages, en degrés, en fonction de la fréquence du signal de sortie par rapport au signal d'entrée, en se plaçant à trois niveaux différents du dispositif.

Dans la description qui suit, on considère que

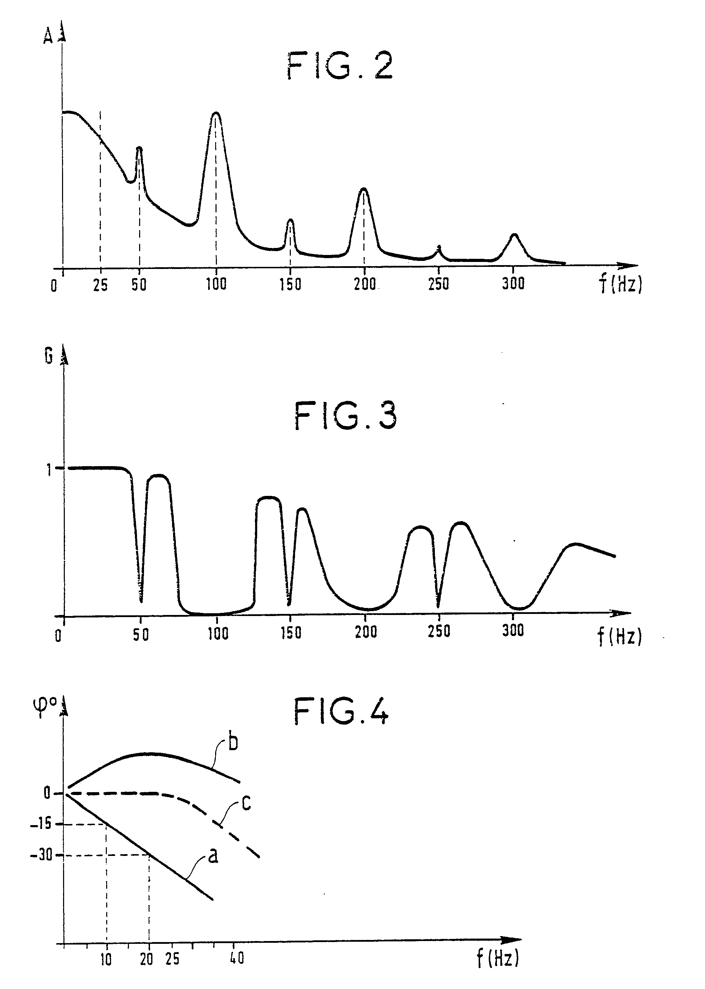

la fréquence $f_o$ de la tension d'alimentation du four à arc est de 50 Hz et que la bande de fréquence 0 à F que l'on souhaite conserver du spectre de fréquence de la puissance du four est de 0 à F = 25 Hz. Ceci afin d'obtenir un signal de commande d'un graduateur de puissance commandé par thyristors, en conservant une modulation fidèle, dans cette gamme de 0 à F, du signal de puissance moyenne représenté sur la figure 2 par l'amplitude A de la courbe à la fréquence f = 0.

En se reportant à la figure 2 on voit que le spectre d'un four à arc comprend des signaux de forte énergie autour des fréquences multiples de la fréquence $f_o$ du réseau d'alimentation soit ici, pour un réseau à 50 Hz : 50, 100, 150, 200, 250, 300 Hz avec des amplitudes décroissantes.

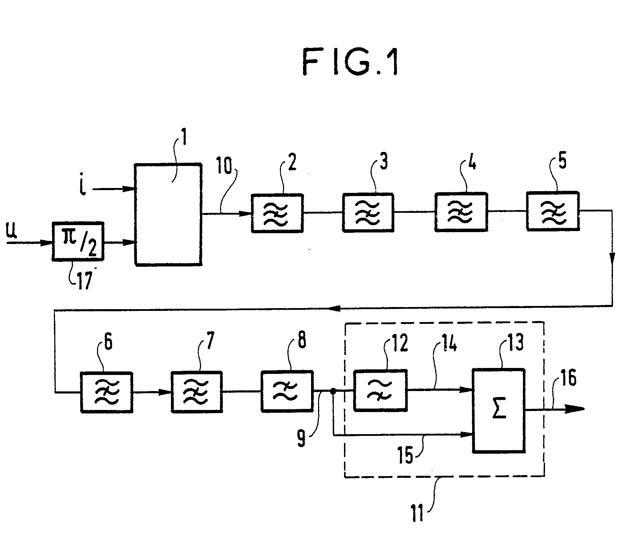

Le dispositif figure 1 comprend donc un démodulateur synchrone 1, recevant sur l'une de ses entrées le courant instantané i absorbé par le four. D'autre part, la tension u, appliquée au four, est envoyée dans un circuit déphaseur 17 de $\pi/2$ dont la sortie est reliée à une seconde entrée du démodulateur 1. On obtient donc en sortie du démodulateur 1, un signal proportionnel à la puissance réactive absorbée par le four dont la figure 2 donne le spectre de fréquence, un ensemble de filtres coupe-bande 2 à 7 calés sur les fréquences ci-dessus jusqu'à un rang suffisamment élevé pour que les signaux résiduels soient faibles, et suivi d'un filtre passe-bas 8.

Les filtres 3, 5 et 7 sont des filtres actifs coupe-bande calés respectivement sur les harmoniques pairs : 2 $f_c$, 4 $f_o$ et 6 $f_o$ soit 100, 200 et 300 Hz et d'une largeur de bande ± F soit en l'occurrence ± 25 Hz.

En effet, le compensateur de puissance réactive et sa commande sont particulièrement sensibles au bruit contenu dans le signal de commande. Et l'on peut approximativement considérer que des signaux de modulation de fréquence F autour des harmoniques pairs produisent le même effet que des signaux à la fréquence F. Ainsi, comme l'on souhaite obtenir une modulation fidèle dans la bande de fréquence 0 à F ici 0 à 25 Hz, il faut éliminer tous les signaux dans une bande de fréquence ± 25 Hz autour des harmoniques pairs.

La coupure dans une bande de fréquence de ± 25 Hz autour des harmoniques pairs 100, 200 et 300 Hz est montrée sur la figure 3 donnant le gain de l'ensemble des filtres en fonction de la fréquence.

Outre la coupure des harmoniques pairs sur une large bande de fréquence de ± F, il est nécessaire également, afin de pouvoir moduler le graduateur avec un taux de modulation élevé dans la bande de fréquence conservée de 0 à 25 Hz, de réduire l'amplitude des signaux inutiles, même s'ils ne produisent pas une modulation nuisible dans la bande de fréquence utile. Ainsi, les filtres 2, 4, 6 sont respectivement des filtres actifs coupe-bandes calés sur les harmoniques impairs : 50, 150 et 250 Hz de bande étroite de l'ordre de ± 2 à 3 Hz.

Enfin, le filtre 8 est un filtre actif passe-bas dont la fréquence de coupure est de 300 Hz.

Les filtres 6 et 8 ne sont pas strictement nécessaires mais leur présence améliore le système.

La figure 3 représente la courbe du gain en fonction de la fréquence compte tenu de la présence des sept filtres 2 à 8.

Cependant, les filtres ci-dessus provoquent un certain déphasage négatif à la sortie 9 du filtre 8 par rapport à l'entrée du signal, en 10, à l'entrée du filtre 2. Ce déphasage est représenté par la courbe a figure 4. Sur cette figure, les déphasages sont donnés en degré en fonction de la fréquence f en hertz.

Un tel déphasage est compensé par un circuit correcteur à avance de phase 11 comprenant un filtre passe-haut 12, actif, du deuxième ordre, relié à la sortie 9 du filtre 8 et un circuit sommateur 13 qui reçoit sur une première entrée 14, le signal de sortie du filtre 12 et dont une deuxième entrée 15 est reliée à la sortie 9 du filtre 8. La fréquence de coupure du filtre passe-haut 12 est choisie alentour de 2 F/3, en l'occurrence 15 Hz.

La courbe b de la figure 4 montre le déphasage propre du correcteur 11 et la courbe C donne la phase de la sortie 16 de l'ensemble par rapport à l'entrée 10.

Le dispositif selon l'invention permet d'obtenir les meilleures performances connues.

Bien entendu, le démodulateur synchrone 1 peut être remplacé par un démodulateur quadratique donnant le carré de la tension ou par un discriminateur à diodes idéalisées donnant la valeur absolue de la tension, en bref, tout circuit dont la sortie est liée à la puissance absorbée par le four. Bien sûr dans ce cas le circuit déphaseur de $\pi/2$ 17 n'a plus de raison d'être.

Le dispositif peut éventuellement être réalisé sous forme numérique.

## Revendications

1. Dispositif d'élaboration d'un signal, correspondant à une grandeur variable liée à la puissance réactive d'un four à arc, pour commander un compensateur de puissance réactive, comprenant un démodulateur de puissance réactive ou de tension (1) suivi d'un ensemble de filtres, caractérisé en ce que cet ensemble comprend des filtres actifs coupe-bande (3, 5, 7) d'une largeur de ± F autour des fréquences 2 $f_o$, 4 $f_o$ et 6 $f_o$ et des filtres actifs coupe-bande (2, 4) à bande très étroite de l'ordre de ± 2 Hz autour des fréquences $f_o$ et 3 $f_o$, $f_o$ étant la fréquence de la tension d'alimentation et F étant voisin de $F_o/2$, ledit ensemble de filtres étant suivi d'un circuit correcteur (11) à avance de phase dans la bande de fréquence 0 à F corrigeant les retards de phase apportés par lesdits filtres.

2. Dispositif selon la revendication 1, caractérisé en ce que ledit ensemble de filtres comporte en outre un filtre actif passe-bas (8) de fréquence de coupure égale à 6 $f_o$.

3. Dispositif selon l'une des revendications 1 ou 2, caractérisé en ce que ledit ensemble de filtre comprend en outre un filtre actif coupe-bande (6) de bande étroite de l'ordre de ± 2 Hz autour de la fréquence 5 $f_o$.

4. Dispositif selon la revendication 1, caractérisé en ce que ledit circuit correcteur (11) à avance de phase comprend un filtre actif, du deuxième ordre, passe-haut (12) dont la fréquence de coupure est de l'ordre de 2 F/3, ledit filtre passe-haut étant alimenté par la sortie (9) dudit ensemble de filtres qui alimente également une première entrée (15) d'un circuit sommateur (13) dont une deuxième entrée (14) reçoit la sortie dudit filtre passe-haut (12).

## Claims

1. A device for generating a signal corresponding to a variable magnitude associated with the reactive power of an arc furnace in order to control a reactive power compensator, comprising a reactive power or voltage demodulator (1), output-connected to a set of filters, characterized in that the set comprises active bandstop filters having a bandwidth ± F relative to frequencies of 2 $f_o$, 4 $f_o$ and 6 $f_o$, and narrow-band active bandstop filters having a bandwidth of substantially ± 2 Hz relative to frequencies of $f_o$ and 3 $f_o$, where $f_o$ is the supply frequency and F is approximately $f_o/2$, and a phase advance corrector circuit operative in the frequency band 0-F output-connected to the set of filters and adapted to correct the phase delays caused by these filters.

2. A device according to claim 1, characterized in that the set of filters further comprises an active lowpass filter (8) with a cut-off frequency of 6 $f_o$.

3. A device according to claim 1 or 2, characterized in that the set of filters further comprises a narrowband active bandstop filter (6) with a bandwidth of substantially ± 2 Hz relative to a frequency of 5 $f_o$.

4. A device according to claim 1, characterised in that the phase advance correctore circuit (11) comprises a second order active highpass filter (1) with a cut-off frequency of substantially 2 F/3, supplied from the output (9) of said set of filters, which also supplies an input of a summing circuit (13), of which a second input (14) receives the output of said highpass filter (12).

## Patentansprüche

1. Vorrichtung zur Erzeugung eines Signals, das einer an die Blindleistung eines Lichtbogenofens gebundenen veränderlichen Größe entspricht, zur Steuerung eines Blindleistungskompensators, mit einem Blindleistungs- oder Spannungsdemodulator (1) und daran angeschlossenen Filtersatz, dadurch gekennzeichnet, daß der Filtersatz aktive Bandsperrfilter (3, 5, 7) mit einer Bandbreite von ± F relativ zu den Frequenzen 2 $f_o$, 4 $f_o$ und 6 $f_o$ und aktive Bandsperrfilter (2, 4) mit sehr schmaler Bandbreite von ca ± 2 Hz relativ zu den Frequenzen $f_o$ und 3 $f_o$ aufweist, wobei $f_o$ die Frequenz der Speisespannung ist und F nahe bei $f_o/2$ liegt, und daß an den Filtersatz ein Phasenvorschubkorrekturkreis (11) im Frequenzband 0 bis F nachgeschaltet ist, der die durch die genannten Filter verursachten Phasenverzögerungen korrigiert.

2. Vorrichtung nach Anspruch 1, dadurch gekennzeichnet, daß der Filtersatz weiter ein aktives Tiefpaßfilter (8) mit einer Grenzfrequenz von 6 $f_o$ aufweist.

3. Vorrichtung nach den Ansprüchen 1 oder 2, dadurch gekennzeichnet, daß der Filtersatz weiter ein aktives Schmalband-Sperrfilter (6) von ± 2 Hz relativ zur Frequenz 5 $f_o$ aufweist.

4. Vorrichtung nach Anspruch 1, dadurch gekennzeichnet, daß der Phasenvorschubkorrekturkreis (11) ein aktives Hochpaßfilter (12) zweiter Ordnung aufweist, dessen Grenzfrequenz bei 2 F/3 liegt, wobei das Hochpaßfilter vom Ausgang (9) des Filtersatzes gespeist wird, der ebenfalls einen ersten Eingang (15) eines Summierkreises (13) speist, dessen zweiter Eingang (14) an den Ausgang des Hochpaßfilters (12) geschaltet ist.

# FIG.1

# FIG. 2

# FIG. 3

# FIG. 4